## Europäisches Patentamt
## European Patent Office
## Office européen des brevets

(19)

(11) Veröffentlichungsnummer : **0 141 950**
**B1**

(12)  **EUROPÄISCHE PATENTSCHRIFT**

(45) Veröffentlichungstag der Patentschrift :
25.05.88

(21) Anmeldenummer : 84110475.5

(22) Anmeldetag : 04.09.84

(51) Int. Cl.⁴ : **C 08 L 77/00, C 08 L 75/06**

(54) **Kerbschlagzähe, in der Schmelze leichtfliessende Polyamide.**

(30) Priorität : 17.09.83 DE 3333723

(43) Veröffentlichungstag der Anmeldung :
22.05.85 Patentblatt 85/21

(45) Bekanntmachung des Hinweises auf die Patenterteilung : 25.05.88 Patentblatt 88/21

(84) Benannte Vertragsstaaten :
DE FR GB IT

(56) Entgegenhaltungen :
EP-A- 0 023 667
US-A- 3 544 524

(73) Patentinhaber : BAYER AG
Konzernverwaltung RP Patentabteilung
D-5090 Leverkusen 1 Bayerwerk (DE)

(72) Erfinder : Richter, Wolfgang, Dr.
Scheiblerstrasse 111
D-4150 Krefeld (DE)
Erfinder : Buysch, Hans-Josef, Dr.
Brandenburger Strasse 28
D-4150 Krefeld (DE)
Erfinder : Brassat, Bert, Dr.
Bethelstrasse 24
D-4150 Krefeld (DE)
Erfinder : Merten, Josef, Dr.
Krünsend 30
D-4052 Korschenbroich 1 (DE)
Erfinder : Haupt, Heinrich, Dr.
Bodelschwinghstrasse 15
D-4150 Krefeld (DE)

EP 0 141 950 B1

Jouve, 18, rue St-Denis, 75001 Paris, France

## Beschreibung

Gegenstand der Erfindung sind kerbschlagzähe, ungefüllte, unverstärkte, in der Schmelze leichtfließende Polyamidformmassen hoher Steifigkeit enthaltend aliphatische, in der C-Kette im wesentlichen unverzweigte Polycarbonat-Polyurethane, hergestellt aus Polyhexamethylencarbonatdiolen und/oder Mischungen mit Oligo- oder Polyalkylenglykolen mit 4-100 C-Atomen und 1,6-Diisocyanatohexan.

Spritzfrische, teilkristalline Polyamide erreichen ihre maximale Zähigkeit erst nach einer Konditionierung durch Wasseraufnahme.

Um die durch Luftfeuchtigkeit eintretende natürliche Konditionierung von teilkristallinen Polyamiden abzukürzen und um von Anfang an optimale Eigenschaften zu erzielen, werden die fertigen PA-Formteile zweckmäßigerweise in Tauchbecken — je nach Materialstärke mehrere Stunden bis Tage — mit warmem Wasser behandelt, bis sie ungefähr 3 % Wasser aufgenommen haben. Dieser 3 %ige Wassergehalt entspricht der Wasseraufnahme bei 50 % rel. Luftfeuchtigkeit. Danach ist in der Regel noch eine längere Lagerung in feuchter Atmosphäre notwendig, um zu gewährleisten, daß die oberflächlich eingedrungenen Wassermoleküle sich im gesamten Formstück gleichmäßig verteilen.

Dies macht deutlich, daß insbesondere für große Formteile und hohe Stückzahlen ein erheblicher Energie-, Zeit- und Investitionsaufwand notwendig ist.

Es wurde daher versucht, auch ohne die aufwendige Wasserkonditionierung durch nieder- oder makromolekulare Modifikationen sofort nach dem Verspritzen kerbschlagzähe, teilkristalline Polyamide zu erhalten. Als niedermolekulare Weichmacher wurden dabei (Di-) Carbonsäureester wie Stearinsäureoctylester, p-Hydroxybenzoesäureester (JA 48-60 750), Phthalsäuredioctylester, Benzoesäureethylester (DOS 1 912 111) sowie phenolische Verbindungen wie 4-Nonylphenol, 4-Methyl-2,6-di-tert.-butylphenol (DOS 1 912 111) oder Mischungen beider Stoffklassen verwendet. Bekannt ist auch die Kerbschlagzähigkeitsverbesserung von Polyamiden durch N-Methyl-pyrrolidon (DOS 1 911 468) und N-Methyl-benzolsulfonamid. Als zusätzlich erwünschter Effekt sinkt dabei die Schmelzviskosität und ermöglicht das Spritzgießen des Materials auch in feine Hohlräume und vom Einspritzort weit entfernte Stellen.

Ein Nachteil der mit Weichmachern versetzten Polyamide ist jedoch ihre geringe Steifigkeit. Eine mit ca. 10 % N-Methylbenzolsulfonamid versetztes Polyamid besitzt im Vergleich zu unmodifiziertem Polyamid mit 3 000 MPa einen Zug-E-Modul von nur noch 1 040 MPa.

Ein weiterer entscheidender Nachteil der niedermolekularen Weichmacher beruht auf der Tatsache, daß sie im Laufe der Zeit ausschwitzen, zu einer unsauberen Oberfläche führen und sich die Eigenschaftswerte infolge Migration verändern. Die Bemühungen konzentrierten sich aus diesem Grunde hauptsächlich auf das Auffinden hochmolekularer Kerbschlagzähigkeitsmodifikatoren.

So werden Polyethylene oder Ethylen-Vinylacetat-Copolymerisate zur Verbesserung der Kerbschlagzähigkeit empfohlen (JA 52-104 567). Den Legierungen haftet jedoch aufgrund der Unverträglichkeit des Copolymeren mit Polyamiden der Nachteil an, daß sie zu Weißbruch neigen. Außerdem nimmt die Fließfähigkeit derart modifizierter Polyamide drastisch ab.

Dies beobachtet man auch bei Modifizierung mit Ethylen-Copolymeren, wie sie z.B. in der DOS 2 011 608 gelehrt wird.

In der DOS 2 931 689 sind zu Zähigkeitsverbesserung von verstärkten Polyamiden u.a. Polyurethanen auch thermoplastische Polyurethane aus aliphatischen Polycarbonaten beschrieben.

Verwendet man die dort beschriebenen Polycarbonaturethane zur Modifizierung von unverstärkten, ungefüllten Polyamiden, so können die daraus hergestellten Formkörper Fehlstellen zeigen oder Formmassen überhaupt nicht thermoplastisch verarbeitbar sein.

Außerdem kann ein Kettenabbau ohne gleichzeitige Verbesserung der Fließfähigkeit staftfinden, wie beim Einsatz von Polyurethan aus Polyhexamethylencarbonat, Polypropylenglykol, Diphenylmethan-4, 4'-diisocyanat und Butandiol-1,4 zur Modifizierung von unverstärktem oder ungefülltem Polyamid beobachtet wird.

Überraschend wurde nun gefunden, daß nur Polycarbonaturethane, hergestellt aus 1) Polyhexamethylencarbonatdiolen oder deren Mischungen mit Oligo- oder Polyalkylenglykolen, mit 4-100 C-Atomen und aus 2) 1,6-Diisocyanatohexan als Modifikatoren für unverstärkte, ungefüllte Polyamide ohne die geschilderten Nachteile, verwendet werden können.

Man erhält dabei Polyamidformmassen, die eine nahezu unverminderte Steifigkeit gegenüber dem unmodifizierten Polyamid aufweisen und deren Kerbschlagzähigkeit und Fließfähigkeit verbessert sind.

Gegenstand der Erfindung sind daher ungefüllte, unverstärkte thermoplastische Polyamidformmassen aus

I. 98-70 Gew.-%, bevorzugt 95-80 Gew.-%, bezogen auf die Komponenten I und II, eines teilkristallinen Polyamids und

II. 2-30 Gew.-%, bevorzugt 5-20 Gew.-%, bezogen auf die Komponenten I und II, eines aliphatischen in der C-Kette im wesentlichen unverzweigten Polycarbonaturethans, hergestellt aus Polyhexamethylencarbonatdiolen oder deren Mischungen mit Oligo- oder Polyalkylenglykolen mit 4-100 C-Atomen und aus 1,6-Diisocyanatohexan.

Als Komponente II werden bevorzugt Polycarbonaturethane, hergestellt aus Mischungen von 100-40 Gew.-%, bevorzugt 100-55, besonders bevorzugt 90-55, Polyhexamethylencarbonat-Diolen mit 0-60 Gew.-%, bevorzugt 0-45 Gew.-%, besonders bevorzugt 10-45, Oligo- bzw. Polyalkylenglykolen mit 4-100 C-Atomen und 1,6-Diisocyanatohexan verwendet.

Als teilkristalline Polyamide werden Polyamid-6, -11 oder -12 oder übliche Polykondensate aus Diaminen und Dicarbonsäuren wie 6,6- und 6,10-Polyamid oder deren Mischungen eingesetzt. Vorzugsweise gelangen 6- und/oder 6,6-Polyamid zur Anwendung.

Polyhexamethylencarbonatdiole werden nach literaturbekannten Verfahren aus Hexandiol-1,6 und Kohlensäureestern, Chlorameisensäureestern oder Phosgen hergestellt [z.B. J. Amer. Chem. Soc. 80, 4 596 (1958), J. Amer. Soc. 55, 5 031 (1933), J. Amer. Chem. Soc. 52, 314 (1930), Houben-Weyl, Methoden der Org. Chemie, Bd. VIII, S. 106 f., 109 (1952)] und besitzen Molekulargewichte (Mn) von 260 bis 20 000, vorzugsweise 260 bis 10 000, insbesondere 260 bis 6 000 (ermittelt durch OH-Gruppenbestimmung bzw. Gelchromatographie).

Erfindungsgemäß zu verwendende Oligo- oder Polyalkylenglykole mit 4 bis 100 C-Atomen sind z.B. Di-, Tri-, Tetra- bzw. Octaethylenglykole, Polyethylenglykole, Polypropylenglykole, Polyethylen/Propylenglykole sowie Polytetrahydrofurane.

Aliphatische, in der C-Kette im wesentlichen unverzweigte Polycarbonaturethane können auch bis zu 10 %, vorzugsweise bis zu 5 %, Verzweigungsstellen enthalten. Derartige aliphatische Polycarbonaturethane entstehen während der Polyaddition durch Reaktion schon gebildeter Urethangruppen mit Isocyanatgruppen oder wenn ein Teil des Polyhexamethylencarbonatdiols durch verzweigte Polyhexamethylencarbonate und/oder wenn ein Teil des Polyetherdiols durch verzweigte Polyalkylenglykole ersetzt wird.

Verzweigte Polyalkylenglykole können nach bekannten Verfahren aus zumindest 3-wertigen Alkoholen, wie Trimethylolpropan, Pentaerythrit, Ethylenoxid oder Propylenoxid hergestellt werden.

Verzweigte Polyhexamethylencarbonate entstehen, wenn man während der Kondensation von Hexandiol-1,6 mit Kohlensäureestern, Chlorameisensäureestern oder Phosgen zumindest 3-wertige Alkohole, wie Trimethylolpropan, Pentaerythrit zusetzt.

Die erfindungsgemäß verwendeten Polycarbonaturethane können nach literaturbekannten Verfahren (z.B. O. Bayer, Angew. Chem. 59, 257 ff. (1947)) aus den angegebenen Diolen und 1,6-Diisocyanatohexan hergestellt werden und sollen Molekulargewichte (Mw) zwischen 1 000 und 100 000, vorzugsweise zwischen 2 000 und 90 000, insbesondere zwischen 5 000 und 15 000, bestimmt mit Hilfe von Gelchromatographie bzw. Lichtstreuung in Dimethylformamid, aufweisen.

Die Einarbeitung des Modifikators erfolgt bei Temperaturen oberhalb vom Schmelzpunkt des eingesetzten Polyamids, bevorzugt bei Temperaturen von 200 bis 300 °C, insbesondere bei 240 bis 290 °C unter Verwendung bekannter Mischvorrichtungen, wie Extruder, Kneter, statische Mischer etc. Zusätzlich können den Polyamiden verschiedene übliche ungefüllte und unverstärkte Zuschläge wie Gleit- und Entformungsmittel, Nucleierungsmittel, Pigmente, Farbstoffe, Stabilisatoren, Kristallisationsbeschleuniger sowie Antistatika beigegeben werden. Derart modifizierte Polyamide lassen sich leicht verspritzen und die daraus hergestellten Formkörper zeichnen sich durch gute Oberflächenbeschaffenheit und verbesserte Kerbschlagzähigkeit bei hoher Steifigkeit aus. Weder im fertigen Teil noch in der Schmelze tritt Entmischung der Polymerkomponenten ein.

Zudem stellte sich überraschend heraus, daß die hergestellten Spritzlinge gleichmäßig durchkristallisiert waren, wobei ihre Sphärolithgröße unter 1 μ lag. Die hohe isotrope Kristallinität des Materials nach Verspritzen gewährleistet, daß die daraus hergestellten Formteile sich nicht infolge nachträglicher Kristallisation (Sphärolithbildung) verziehen. Durch die Kristallisationsfreudigkeit und der damit verbundenen guten Entformbarkeit sind obendrei rasche Spritzcyclen möglich.

Die erfindungsgemäßen Polyamidformmassen können zu Formkörpern mit sehr guter Zähigkeit im spritzfrischen Zustand verarbeitet werden, beispielsweise zu Schutzhelmen, da aufgrund des großen Oberfläche/Wandstärke-Verhältnisses für Schutzhelme ein besonders leichtfließendes thermoplastisches Spritzgußmaterial benötigt wird, das außerdem aus Sicherheitsgründen auch eine hohe Seitensteifigkeit und gute Schlag- und Kerbschlagzähigkeit im spritzfrischen Zustand aufweist. Die in den Beispielen angegebenen Prozente sind Gew.-%.

Polycarbonaturethan A

1 068 g (0,5 Mol*) Polyhexamethylencarbonat (M_N = 2 138 ; OH-Zahl : 52,5) werden mit 150 g (0,25 Mol) eines mit Propylenglykol gestarteten Ethylenoxid-Polyetherdiols (M_N = 600 ; prim. OH ≥ 90 %) bei

* Unter der Angabe Mol des polydispersen Systems wird verstanden :

$$\text{Mole} = \frac{\text{Mol OH-Gruppen}}{\text{Funktionalität d. Polymeren}} = \frac{\text{OH-Zahl} \times \text{Einwaage in kg}}{56.11 \times \text{Funktionalität}}$$

Die Funktionalität des eingesetzten Polyhexamethylencarbonates beträgt 2.

3

80 °C homogen gemischt und innerhalb von 1 h 40' mit 117,7 g (0,7 Mol) 1,6-Diisocyanatohexan unter Rühren versetzt. Zur Vervollständigung der Reaktion wird noch 2 h bei 84 bis 94 °C reagieren lassen. Das Produkt wird nach Erkalten mittels einer Mühle geschrotet.

Schmelzbereich : 45 bis 50 °C.

Molgewicht (Mw) : 29 800.

### Polycarbonaturethan B

1 282 g (0,6 Mol*) Polyhexamethylencarbonat ($M_N$ = 2 138 ; OH-Zahl : 52,5) werden mit 90 g (0,15 Mol) eines mit Propylenglykol gestarteten Ethylenoxid-Polyetherdiols ($M_n$ = 600 ; prim. OH $\geq$ 90 %) bei 80 °C homogen gemischt und innerhalb von 70' unter Rühren mit 58,8 g (0,25 Mol) 1,6-Diisocyanatohexan versetzt. Zur Vervollständigung der Reaktion erwärmt man noch 3,5 h auf 80 °C. Das Produkt wird nach Erkalten mittels einer Mühle geschrotet.

Schmelzbereich : 53 bis 58 °C.

Molgewicht (Mw) : 8 600.

### Polycarbonaturethan C

1 282 g (0,6 Mol*) Polyhexamethylencarbonat werden mit 233 g (1,2 Mol) Tetraethylenglykol bei 80 °C homogen gemischt und innerhalb von 100' unter Rühren mit 291,5 g (1,73 Mol) 1,6-Diisocyanatohexan versetzt. Zur Vervollständigung der Reaktion erwärmt man noch 4 h auf 85 °C. Das Produkt wird nach Erkalten mittels einer Mühle geschrotet.

Schmelzbereich : 80 bis 90 °C.

Molgewicht (Mw) : 35 700.

### Polycarbonaturethan D

854,8 g (0,4 Mol*) Polyhexamethylencarbonat ($M_N$ = 2 138 ; OH-Zahl : 52,5) werden mit 400 g (0,2 Mol) eines Polypropylenglykols ($M_N$ = 2 000, sek. OH $\geq$ 97 %) bei 80 °C homogen gemischt und innerhalb von 1,5 h unter Rühren mit 92,5 g (0,55 Mol) 1,6-Diisocyanatohexan versetzt. Zur Vervollständigung der Reaktion erwärmt man noch 4 h auf 90 bis 122 °C (kein NCO mehr titrierbar). Das Produkt wird nach Erkalten mittels einer Mühle geschrotet.

Schmelzbereich : 60 bis 70 °C.

Molgewicht (Mw) : 82 200.

### Polycarbonaturethan E

1 068 g (0,5 Mol*) Polyhexamethylencarbonat ($M_N$ = 2 138 ; OH-Zahl : 52,5) werden zu 740 g (2 Mol) Polyethylenglykol (Octaethylenglykol-Homologengemisch) gegeben und bei 75 °C homogenisiert. Innerhalb von 2 h werden bei 78 bis 108 °C unter Rühren 406,5 g (2,42 Mol) 1,6-Diisocyanatohexan zugetropft. Zur Vervollständigung der Umsetzung läßt man noch 3 h bei ca. 120 °C nachreagieren. Das Produkt wird nach Erkalten mittels einer Mühle geschrotet.

Schmelzbereich : 100 bis 120 °C.

Molgewicht (Mw) : 51 800.

### Polycarbonaturethan F

249,2 g (1,48 Mol) 1,6-Diisocyanatohexan werden bei 76 bis 80 °C unter Rühren innerhalb von 105' zu 1 000 g (1,52 Mol) Hexandiol-Polycarbonat ($M_N$ = 656, OH-Zahl 171) getropft. Man läßt noch 5 h bei 86 °C nachreagieren bis keine freien Isocyanatgruppen mehr titrierbar sind. Nach Erkalten wird der Ansatz mittels einer Mühle geschrotet.

Schmelzbereich : 55 bis 65 °C.

Molgewicht (Mw) : 20 600.

### Beispiele 1-6

Gemische aus 90 Gew.-% Polyamid 6 und 10 Gew.-% der jeweils in der Tabelle 1 angegebenen

* Unter der Angabe Mol des polydispersen Systems wird verstanden :

$$\text{Mole} = \frac{\text{Mol OH-Gruppen}}{\text{Funktionalität d. Polymeren}} = \frac{\text{OH-Zahl} \times \text{Einwaage in kg}}{56.11 \times \text{Funktionalität}}$$

Die Funktionalität des eingesetzten Polyhexamethylencarbonates beträgt 2.

Polycarbonaturethanen wurden bei 250 °C auf einem Doppelwellen-Schneckenextruder vom Typ ZSK 53 der Fa. Werner und Pfleiderer homogenisiert. Der extrudierte Strang wurde im Wasserbad abgesponnen, granuliert, das Granulat bei 80 °C im Vakuum getrocknet und anschließend zu den Prüfkörpern verspritzt. Die Eigenschaften der modifizierten Polyamide sind in Tabelle 1 zusammengefaßt und vergleichsweise den Werten für unmodifiziertes PA-6 gegenübergestellt.

Aus Tabelle 1 ersieht man, daß die erfindungsgemäßen Modifikatoren zu Polyamiden mit wesentlicher erhöhter Kerbschlagzähigkeit bei großer Fließlänge und nahezu unverminderter Steifigkeit führen, ohne die $\eta$ rel Viskosität zu beeinträchtigen.

(Siehe Tabelle Seite 6 f.)

Tabelle 1

| Beispiele | | | | 1 | 2 | 3 | 4 | 5 | 6 |
|---|---|---|---|---|---|---|---|---|---|
| | Polyamid-6/Gew.-% | 100 | Gew.-% | 90 | 90 | 90 | 90 | 90 | 90 |
| | Polycarbonaturethan/Gew.-% | — | | A/10 | B/10 | C/10 | D/10 | E/10 | F/10 |
| DIN 53 453 | Kerbschlagzähigkeit (Spritzfrisch) $a_K$ kJ/m² | 3.2 | | 9.3 | 9.4 | 9.4 | 8.7 | 12.4 | 12.3 |
| DIN 52 457 | Zug-E-Modul (spritzfrisch) GP a | 2.47 | | 2.36 | 2.44 | 2.34 | 2.51 | 2.35 | 2.37 |
| * | Fließlänge cm | 35 | | 61 | 57 | 50 | 60 | 55 | 58 |
| | rel. Viskosität $\eta_{rel}$ ** | 3.82 | | 3.84 | 3.68 | 3.96 | 3.67 | 3.86 | 3.92 |

* Die Fließlänge stellt ein Maß für die Fließfähigkeit von Polyamid-Schmelzen dar. Sie wird ermittelt, indem ein auf 90 °C geheiztes Spiralwerkzeug (Spirale : 1 000 mm × 4 mm × 2,5 mm) von der Mitte her mit der Polymerschmelze (260 °C) unter einem Druck von 72 bar angespritzt wird. Den Weg, den die Schmelze unter diesen Bedingungen zurücklegt, gemessen in cm, bezeichnet man als Fließlänge.

** $\eta_{rel}$ gemessen an einer 1 %igen Lösung in m-Kresol bei 25 °C.

**Patentansprüche**

1. Unverstärkte und ungefüllte thermoplastische Formmassen aus
   I. 98 bis 70 Gew.-% eines teilkristallinen Polyamids und
   II. 2 bis 30 Gew.-% eines aliphatischen, in der C-Kette im wesentlichen unverzweigten Polycarbonaturethans hergestellt aus Polyhexamethylencarbonatdiolen oder deren Mischungen mit Oligo- oder Polyalkylenglykolen mit 4 bis 100 C-Atomen und aus 1,6-Diisocyanatohexan und üblichen Hilfs- und Zuschlagstoffen.

2. Formmassen nach Anspruch 1, dadurch gekennzeichnet, daß sie 95-80 Gew.-% der Komponente I und 5-20 Gew.-% der Komponente II enthalten.

3. Formmassen nach Anspruch 1 oder 2, dadurch gekennzeichnet, daß di Komponente II ein Molekulargewicht von 1 000 bis 100 000 aufweist.

4. Formmassen nach Anspruch 3, dadurch gekennzeichnet, daß die Komponente II ein Molekulargewicht von 2 000 bis 90 000 aufweist.

5. Formmassen nach Anspruch 3, dadurch gekennzeichnet, daß die Komponente II ein Molekulargewicht von 5 000-85 000 aufweist.

6. Formassen nach Ansprüchen 1 bis 5, dadurch gekennzeichnet, daß die Komponente II aus einer Mischung aus 100 bis 40 Gew.-% Polyhexamethylencarbonatdiolen mit 0 bis 60 Gew.-% Oligo- oder Polyalkylenglykolen mit 4 bis 100 C-Atomen und 1,6-Diisocyanatohexan aufgebaut wurde.

7. Formmassen nach Ansprüchen 1 bis 6, dadurch gekennzeichnet, daß die Komponente II aus Mischung von 100-55 Polyhexamethylencarbonat-Diolen mit 0-45 Gew.-% Oligo- bzw. Polyalkylenglykolen mit 4-100 C-Atomen und 1,6-Diisocyanatohexan aufgebaut wurden.

8. Formmassen nach Ansprüchen 1 bis 7, dadurch gekennzeichnet, daß die Komponente II aus einer Mischung von 90-55 Polyhexamethylencarbonat-Diolen mit 10-45 Oligo- bzw. Polyalkylenglykolen aufgebaut wurde.

9. Formmassen nach Ansprüchen 1 bis 8, dadurch gekennzeichnet, daß als Komponente I Polyamid-6 und/oder Polyamid-6,6 verwendet werden.

**Claims**

1. Thermoplastic molding compositions of
   I) 98 to 70 % by weight of a partially crystalline polyamide and
   II) 2 to 30 % by weight of an aliphatic polycarbonate urethane substantially unbranched in the C-chain produced from polyhexamethylene carbonate diols or mixtures thereof with oligo- or polyalkylene glycols containing from 4 to 100 carbon atoms and from 1,6-diisocyanatohexane and standard auxiliaries and additives.

2. Molding compositions as claimed in claim 1, characterized in that they contain 95 to 80 % by weight of component I and 5 to 20 % by weight of component II.

3. Molding compositions as claimed in claim 1 or 2, characterized in that component II has a molecular weight of 1 000 to 100 000.

4. Molding compositions as claimed in claim 3, characterized in that component II has a molecular weight of 2 000 to 90 000.

5. Molding compositions as claimed in claim 3, characterized in that component II has a molecular weight of 5 000 to 85 000.

6. Molding compositions as claimed in claims 1 to 5, characterized in that component II was synthesized from a mixture of 100 to 40 % by weight polyhexamethylene carbonate diols with 0 to 60 % by weight oligo- or polyalkylene glycols containing 4 to 100 carbon atoms and 1,6-diisocyanatohexane.

7. Molding compositions as claimed in claims 1 to 6, characterized in that component II was synthesized from a mixture of 100 to 55 % by weight polyhexamethylene carbonate diols with 0 to 45 % by weight oligo- or polyalkylene glycols containing 4 to 100 carbon atoms and 1,6-diisocyanatohexane.

8. Molding compositions as claimed in claims 1 to 7, characterized in that component II was synthesized from a mixture of 90 to 55 % by weight polyhexamethylene carbonate diols with 10 to 45 % by weight oligo- polyalkylene glycols.

9. Molding compositions as claimed in claims 1 to 8, characterized in that polyamide-6 and/or polyamide-6,6 is used as component I.

**Revendications**

1. Matières à mouler thermoplastiques non renforcées et non chargées consistant en
   I) 98 à 70 % en poids d'un polyamide partiellement cristallin et
   II) 2 à 30 % en poids d'un polycarbonate-uréthanne aliphatique, essentiellement non ramifié dans la chaîne carbonée, préparé à partir de polyhexaméthylène-carbonate-diols ou de leurs mélanges avec des oligo- ou poly-alkylène-glycols en $C_4$-$C_{100}$ et du 1,6-diisocyanato-hexane, et des produits auxiliaires et additifs usuels.

2. Matières à mouler selon la revendication 1, caractérisées en ce qu'elles contiennent de 95 à 80 % en poids du composant I et de 5 à 20 % en poids du composant II.

3. Matières à mouler selon la revendication 1 ou 2, caractérisées en ce que le composant II a un poids moléculaire de 1 000 à 100 000.

4. Matières à mouler selon la revendication 3, caractérisées en ce que le composant II a un poids moléculaire de 2 000 à 90 000.

5. Matières à mouler selon la revendication 3, caractérisées en ce que le composant II a un poids moléculaire de 5 000 à 85 000.

6. Matières à mouler selon les revendications 1 à 5, caractérisées en ce que le composant II a été préparé à partir d'un mélange de 100 à 40 % en poids de polyhexaméthylène-carbonate-diols et 0 à 60 % en poids d'oligo- ou poly-alkylène-glycols en $C_4$-$C_{100}$ et du 1,6-diisocyanato-hexane.

7. Matières à mouler selon les revendications 1 à 6, caractérisées en ce que le composant II a été préparé à partir d'un mélange de 100 à 55 % en poids de polyhexaméthylène-carbonate-diols et 0 à 45 % en poids d'oligo- ou poly-alkylène-glycols en $C_4$-$C_{100}$ et du 1,6-diisocyanato-hexane.

8. Matières à mouler selon les revendications 1 à 7, caractérisées en ce que le composant II a été préparé à partir d'un mélange de 90 à 55 % en poids de polyhexaméthylène-carbonate-diols et 10 à 45 % en poids d'oligo- ou poly-alkylène-glycols.

9. Matières à mouler selon les revendications 1 à 8, caractérisées en ce que le composant I consiste en du polyamide-6 et/ou du polyamide-6,6.